(19) Europäisches Patentamt
European Patent Office
Office européen des brevets

(11) **EP 2 771 782 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **12783117.0**

(22) Anmeldetag: **25.10.2012**

(51) Int Cl.:
*G06F 7/72* (2006.01)     *H04L 9/08* (2006.01)

(86) Internationale Anmeldenummer:
**PCT/EP2012/004477**

(87) Internationale Veröffentlichungsnummer:
**WO 2013/060467 (02.05.2013 Gazette 2013/18)**

(54) **EFFIZIENTE PRIMZAHLPRÜFUNG**

EFFICIENT PRIMALITY CHECKING

TEST DE PRIMALITÉ EFFICACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2011 DE 102011117236**

(43) Veröffentlichungstag der Anmeldung:
**03.09.2014 Patentblatt 2014/36**

(73) Patentinhaber: **Giesecke+Devrient Mobile Security GmbH**
**81677 München (DE)**

(72) Erfinder: **PULKUS, Jürgen**
**80469 München (DE)**

(56) Entgegenhaltungen:
**EP-A2- 2 104 031**

- **CHEUNG R C C ET AL: "A scalable hardware architecture for prime number validation", FIELD-PROGRAMMABLE TECHNOLOGY, 2004. PROCEEDINGS. 2004 IEEE INTERNATIO NAL CONFERENCE ON BRISTANE, AUSTRALIA DEC. 6-8, 2004, PISCATAWAY, NJ, USA,IEEE, 6. Dezember 2004 (2004-12-06), Seiten 177-184, XP010767546, DOI: 10.1109/FPT.2004.1393266 ISBN: 978-0-7803-8651-8**
- **ADRIEN LE MASLE ET AL: "Parametric Encryption Hardware Design", 17. März 2010 (2010-03-17), RECONFIGURABLE COMPUTING: ARCHITECTURES, TOOLS AND APPLICATIONS, SPRINGER BERLIN HEIDELBERG, BERLIN, HEIDELBERG, PAGE(S) 68 - 79, XP019139363, ISBN: 978-3-642-12132-6 Abschnitte 2 und 3**

## Beschreibung

Die Erfindung betrifft allgemein das technische Gebiet der effizient implementierbaren kryptographischen Verfahren. Spezieller betrifft die Erfindung ein Verfahren zur effizienten Prüfung, ob ein Wert eine Primzahl darstellt. Besonders eignet sich die Erfindung zur Verwendung in einem tragbaren Datenträger. Ein solcher tragbarer Datenträger kann z.B. eine Chipkarte (*smart card*) in unterschiedlichen Bauformen oder ein Chipmodul oder ein vergleichbares ressourcenbeschränktes System sein.

Effiziente Verfahren zur Primzahlermittlung sind für viele kryptographische Anwendungen erforderlich. So müssen z.B. zur Schlüsselgenerierung bei dem im US-Patent 4,405,829 beschriebenen RSA-Verfahren zwei geheime Primzahlen festgelegt werden, deren Produkt einen Teil des öffentlichen Schlüssels bildet. Die Größe dieser Primzahlen hängt von den Sicherheitsanforderungen ab und beträgt in der Regel mehrere hundert bis einige tausend Bit. Voraussichtlich wird die geforderte Größe in Zukunft noch deutlich ansteigen.

Insgesamt ist die Primzahlsuche der mit Abstand rechenintensivste Schritt bei der RSA-Schlüsselgenerierung. Aus Sicherheitsgründen wird oft gefordert, dass die Schlüsselgenerierung durch den Datenträger selbst ausgeführt wird. Ja nach dem Typ das Datenträgers kann dieser Vorgang während der Produktion des Datenträgers (z.B. der Komplettierung oder Initialisierung oder Personalisierung) einen Zeitaufwand verursachen, der stark variiert und gegebenenfalls mehrere Minuten betragen kann. Da Produktionszeit teuer ist, stellt die zur Schlüsselgenerierung erforderliche Zeit einen erheblichen Kostenfaktor dar. Es ist daher wünschenswert, die Schlüsselgenerierung zu beschleunigen und damit den erzielbaren Durchsatz einer Produktionsanlage für tragbare Datenträger zu erhöhen.

Ein wichtiger Schritt zur Verringerung der Produktionszeit ist es, ein effizientes Verfahren zur Primzahlsuche zu verwenden, das ferner einige Randbedingungen hinsichtlich der erzeugten Primzahlen erfüllt. Derartige Verfahren sind bereits vorgeschlagen worden und beispielsweise aus den Offenlegungsschriften DE 10 2004 044 453 A1 und EP 1 564 649 A2 bekannt.

Bei RSA-Verfahren sind auch die nach der Schlüsselgenerierung erfolgenden Ver- und Entschlüsselungsvorgänge relativ rechenaufwendig. Insbesondere für tragbare Datenträger mit ihrer beschränkten Rechenleistung wird daher oft eine Implementierung eingesetzt, die bei der Entschlüsselung und der Signaturerzeugung den Chinesischen Restklassensatz (CRT = *Chinese remainder theorem*) verwendet und daher auch als RSA-CRT-Verfahren bezeichnet wird. Durch Verwendung des RSA-CRT-Verfahrens reduziert sich der für die Entschlüsselung und Signaturerzeugung erforderliche Rechenaufwand ungefähr um den Faktor 4.

Zur Vorbereitung des RSA-CRT-Verfahrens werden bei der Bestimmung des privaten Schlüssels neben den beiden geheimen RSA-Primfaktoren weitere Werte berechnet und als Parameter des privaten Schlüssels abgespeichert. Nähere Informationen hierzu sind beispielsweise in der Offenlegungsschrift WO 2004/032411 A1 enthalten. Da die Berechnung der weiteren RSA-CRT-Schlüsselparameter in der Regel ebenfalls während der Produktion des tragbaren Datenträgers ausgeführt wird, ist es wünschenswert, auch hierfür möglichst effiziente Verfahren zu verwenden.

Viele tragbare Datenträger enthalten Koprozessoren, die bestimmte Berechnungsvorgänge unterstützen. Insbesondere sind Datenträger bekannt, deren Koprozessoren eine als Montgomery-Multiplikation bekannte Operation unterstützen, die in dem Artikel "Modular multiplication without trial division" von Peter L. Montgomery, erschienen in Mathematics of Computation, Vol. 44, Nr. 170, April 1985, Seiten 519-521 beschrieben ist. Es wäre wünschenswert, die Fähigkeiten von gegenwärtig verfügbaren oder zukünftig auf den Markt kommenden Koprozessoren möglichst gut auszunutzen.

Eine für Rabin Miller-Tests optimierte Montgomery-Hardware schlägt der Artikel "A Scalable Hardware Architecture for Prime Number Validation" von Cheung et al. aus dem Jahr 2004 vor. Weitere Hardwareausgestaltungen sind in "Parametric Encryption Hardware Design" von Le Masle et al. aus dem Jahr 2010 beschrieben. EP 2104031 A2 offenbart eine Chipkarte mit Primzahlentester, welcher einen Fermat-Test und einen Rabin-Miller-Test ausführt.

Die Erfindung hat demgemäß die Aufgabe, eine effiziente Technik zur Primzahlprüfung bereitzustellen.

Erfindungsgemäß wird diese Aufgabe gelöst durch den Gegenstand der unabhängigen Ansprüche. Die abhängigen Ansprüche betreffen optionale Merkmale einiger Ausgestaltungen der Erfindung. Das Verfahren dient erfindungsgemäß für kryptographische Zwecke, also beispielsweise zur Bestimmung mindestens eines Parameters für ein RSA-Verfahren oder ein RSA-CRT-Verfahren oder ein anderes kryptographisches Verfahren.

Die Erfindung geht von der Grundüberlegung aus, die für einen Fermat-Test erforderliche modulare Potenzberechnung (ausschließlich) unter Verwendung von Montgomery-Operationen - hierunter sollen insbesondere Montgomery-Multiplikationen und Montgomery-Quadrierungen verstanden werden - auszuführen. Durch die Erfindung ergibt sich ein erheblicher Effizienzgewinn insbesondere dann, wenn eine Plattform verwendet wird, die Montgomery-Operationen mit den für kryptographische Zwecke erforderlichen Bitlängen hardwaremäßig - z.B. durch einen speziellen Koprozessor - unterstützt.

Gemäß der Erfindung kann die modulare Potenzierung mit einem positiven und ganzzahligen Exponenten und einer Basis, die ein gebrochenzahliger Wert mit einer Zweierpotenz im Nenner ist, geschrieben werden. Beispielsweise kann die Basis den Wert ½ aufweisen. Es versteht sich, dass sich modulare Potenzierungen der genannten Art auch anders schreiben lassen, so z.B. die modulare Potenzierung $(1/2)^e \bmod m$ gleichwertig als $2^{-e} \bmod m$. Dies soll jedoch den Schutzbereich nicht einschränken. Der Modul ist gleich dem zu prüfenden Wert.

In manchen Ausgestaltungen wird die modulare Potenzierung in mehreren Verfahrensabschnitten ausgeführt, wobei in jedem Abschnitt jeweils mehrere - z.B. acht - Montgomery-Quadrierungen eines Zwischenergebnisses und genau eine Montgomery-Multiplikation des Zwischenergebnisses mit einem von dem Exponenten der modularen Potenzierung abhängigen Faktor erfolgen. Dieser Faktor kann beispielsweise eine Zweierpotenz oder eine mit dem Modul durch eine geeignete Operation verknüpfte Zweierpotenz sein.

Wegen der Unterschiede zwischen Montgomery-Operationen und "normalen" modularen Operationen findet in vielen Ausführungsformen eine Umcodierung statt, die aus der üblichen Binärdarstellung des Exponenten für die modulare Potenzierung einen umcodierten Exponenten erzeugt. Insbesondere können Bitgruppen des umcodierten Exponenten die im vorhergehenden Absatz genannten Zweierpotenzen definieren. Die Umcodierung kann beispielsweise eine Subtraktion des ursprünglichen Exponenten von einem Wert umfassen, der von einem Montgomery-Parameter abhängt.

Die Aufzählungsreihenfolge der Schritte in den Verfahrensansprüchen soll nicht als Einschränkung des Schutzbereichs verstanden werden. Es sind vielmehr auch Ausgestaltungen der Erfindung vorgesehen, in denen diese Schritte ganz oder teilweise in anderer Reihenfolge und/oder ganz oder teilweise ineinander verschachtelt (*interleaved*) und/oder ganz oder teilweise parallel ausgeführt werden.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, z.B. ein Halbleiterspeicher oder eine Diskette oder eine CD-ROM. Das Computerprogrammprodukt kann jedoch in manchen Ausführungsformen auch ein nicht-körperliches Medium sein, z.B. ein über ein Computernetzwerk übermitteltes Signal. Insbesondere kann das Computerprogrammprodukt Programmbefehle enthalten, die im Zuge der Produktion eines tragbaren Datenträgers in diesen eingebracht werden.

Die erfindungsgemäße Vorrichtung kann insbesondere ein tragbarer Datenträger, z.B. eine Chipkarte oder ein Chipmodul, sein. Ein derartiger Datenträger enthält in an sich bekannter Weise mindestens einen Prozessor, mehrere in unterschiedlichen Technologien ausgestaltete Speicher und diverse Hilfsbaugruppen. In der Wortwahl des vorliegenden Dokuments soll der Begriff "Prozessor" sowohl Hauptprozessoren als auch Koprozessoren umfassen.

In bevorzugten Weiterbildungen weisen das Computerprogrammprodukt und/oder die Vorrichtung Merkmale auf, die den in der vorliegenden Beschreibung erwähnten und/oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele und Ausführungsalternativen. Es wird auf die schematische Zeichnung verwiesen.

Fig. 1 zeigt ein Flussdiagramm eines Verfahrens zur Bestimmung zweier Primzahlen sowie weiterer Parameter eines RSA-CRT-Schlüssels,

Fig. 2 zeigt ein Flussdiagramm eines Verfahrens zur Bestimmung eines Primzahlkandidaten,

Fig. 3 zeigt eine schematische Darstellung von Komponenten eines tragbaren Datenträgers, der zur Ausführung der Verfahren von Fig. 1 und Fig. 2 geeignet ist,

Fig. 4 zeigt ein Flussdiagramm eines Verfahrens zur Ausführung eines Fermat-Tests, und

Fig. 5 zeigt einen beispielhaften Ablauf eines Verfahrens zur modularen Potenzberechnung mit der Basis ½ und einem positiven und ganzzahligen Exponenten e unter Verwendung von Montgomery-Operationen.

Im vorliegenden Dokument wird die Erfindung insbesondere in Zusammenhang mit der Bestimmung eines, mehrerer oder aller Parameter eines RSA-CRT-Schlüsselpaars beschrieben. Die Erfindung ist jedoch auch für andere Anwendungszwecke einsetzbar, bei denen relativ große und zufällige Primzahlen bestimmt werden müssen. Derartige Anwendungszwecke können beispielsweise die Berechnung eines geheimen RSA-Schlüssels ohne CRT-Parameter oder die Berechnung von Primzahlen für andere kryptographische Verfahren sein.

Allgemein sind die Parameter eines RSA-CRT-Schlüsselpaars von zwei geheimen Primzahlen $p$ und $q$ sowie einem öffentlichen Exponenten $e$ abgeleitet. Hierbei ist der öffentliche Exponent $e$ eine zum Wert $(p\text{-}1)\cdot(q\text{-}1)$ teilerfremde Zahl, die zufällig gewählt oder fest vorgegeben sein kann. Beispielsweise wird in manchen Ausführungsbeispielen die vierte Fermat'sche Primzahl $F_4 = 2^{16} + 1$ als öffentlicher Exponent $e$ verwendet. Der öffentliche Schlüssel enthält den öffentlichen Exponenten $e$ und einen öffentlichen Modul $N := p\cdot q$. Der private RSA-CRT-Schlüssel enthält neben den beiden Primzahlen $p$ und $q$ das modulare Inverse $p_{inv} := p^{-1} \bmod q$ sowie die beiden CRT-Exponenten $d_p$ und $d_q$, die durch $d_p := e^{-1} \bmod (p\text{-}1)$ beziehungsweise $d_q := e^{-1} \bmod (q\text{-}1)$ definiert sind.

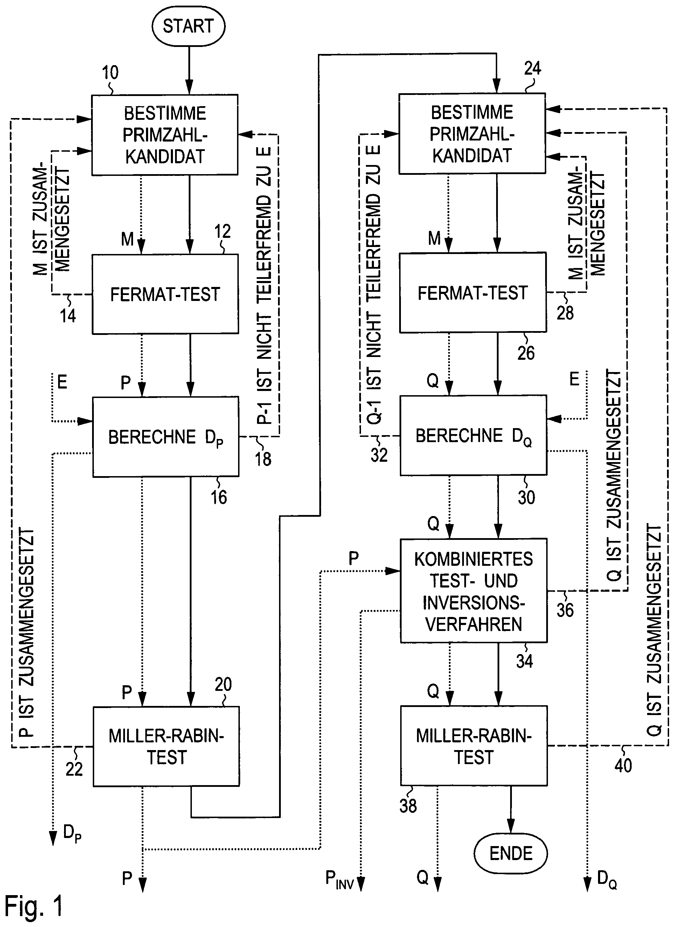

Das Verfahren gemäß Fig. 1 zeigt die Berechnung aller Parameter eines geheimen RSA-CRT-Schlüssels bei vorgegebenem öffentlichen Exponenten $e$. Das Verfahren besteht aus zwei Teilen, die in einer linken bzw. rechten Spalte von Fig. 1 dargestellt sind. Der erste Teil (Schritte 10, 12, 16 und 20) umfasst die Bestimmung der einen Primzahl $p$ und des damit zusammenhängenden Schlüsselparameters $d_p$, während der zweite Teil (Schritte 24, 26, 30, 34 und 38) die Bestimmung der anderen Primzahl $q$ und der Schlüsselparameter $d_q$ und $p_{inv}$ betrifft.

Es versteht sich, dass das Verfahren in Ausführungsalternativen derart abgewandelt werden kann, dass nur manche der gerade genannten Parameter berechnet werden. Hierzu können beispielsweise Verfahrensschritte weggelassen oder verkürzt werden, wenn manche Schlüsselparameter anderweitig berechnet oder gar nicht benötigt werden. Insbesondere kann vorgesehen sein, nur einen der beiden in Fig. 1 gezeigten Verfahrensteile (also entweder nur die Schritte 10, 12, 16 und 20 oder nur die Schritte 24, 26, 30, 34 und 38) auszuführen, wenn nur eine einzige Primzahl bestimmt zu werden braucht.

In Fig. 1 und den weiteren Zeichnungsfiguren zeigen die durchgezogenen Pfeile den regulären Programmfluss, und die gestrichelten Pfeile zeigen alternative Programmabläufe, die unter gewissen Bedingungen - insbesondere, wenn sich ein Primzahlkandidat oder eine voraussichtliche Primzahl als zusammengesetzt erweisen - ausgeführt werden. Die gepunkteten Pfeile veranschaulichen den Datenfluss.

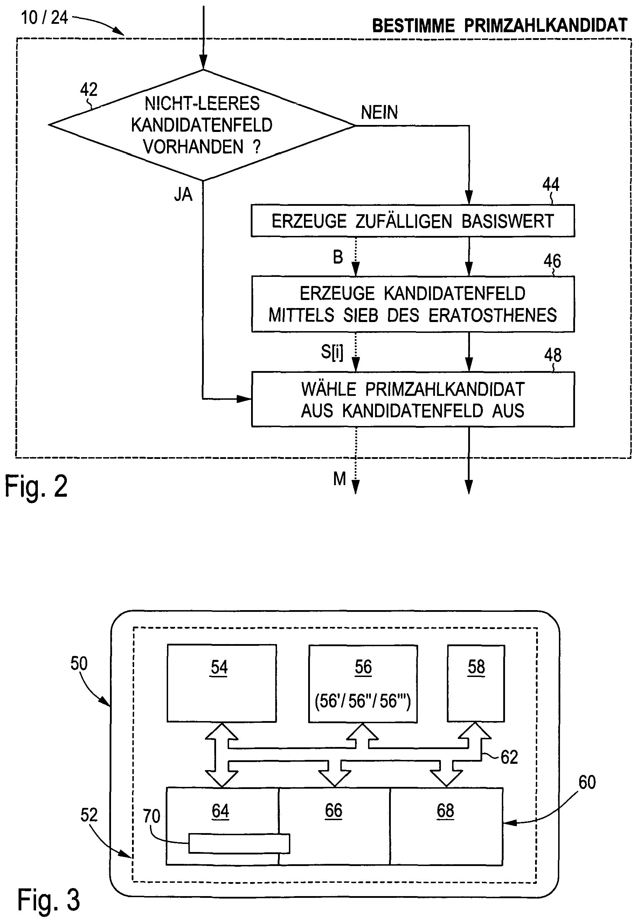

Der in Fig. 1 dargestellte Ablauf beginnt in Schritt 10 mit der Erzeugung eines ersten Primzahlkandidaten $m$, der gewisse Randbedingungen (insbesondere die Randbedingung $m \equiv 3 \bmod 4$) erfüllt. In den hier beschriebenen Ausführungsbeispielen wird bei der Bestimmung jedes Primzahlkandidaten $m$ eine Vorauswahl getroffen, die sicherstellt, dass der Primzahlkandidat $m$ nicht schon durch eine kleine Primzahl (z.B. 2, 3, 5, 7, ...) teilbar ist. Ein geeignetes Bestimmungsverfahren mit Vorauswahl ist in Fig. 2 gezeigt und wird unten genauer beschrieben.

In Schritt 12 wird der Primzahlkandidat $m$ einem Fermat-Test unterzogen. Der Fermat-Test ist ein probabilistischer Primzahltest, der eine zusammengesetzte Zahl mit hoher Wahrscheinlichkeit als solche erkennt, während eine Primzahl nie fälschlich als zusammengesetzte Zahl angesehen wird. Der Fermat-Test beruht auf dem kleinen Fermat'schen Satz, der besagt, dass für jede Primzahl $p$ und jede natürliche Zahl $a$ die Beziehung $a^p \equiv a \bmod p$ gilt. Die Umkehrung gilt nicht notwendigerweise, aber Gegenbeispiele sind so selten, dass ein Primzahlkandidat $m$, der den Fermat-Test besteht, mit an Sicherheit grenzender Wahrscheinlichkeit eine Primzahl ist.

Falls der Primzahlkandidat $m$ bei dem Fermat-Test in Schritt 12 als zusammengesetzte Zahl erkannt wird, erfolgt ein Rücksprung 14 nach Schritt 10, in dem ein neuer Primzahlkandidat bestimmt wird. Andernfalls wird das Verfahren fortgesetzt, wobei der Primzahlkandidat $m$ als voraussichtliche Primzahl $p$ angesehen wird.

In Schritt 16 wird der CRT-Exponent $d_p$, der vermöge $d_p := e \bmod (p\text{-}1)$ definiert ist, berechnet. Hierfür wird ein an sich bekanntes Inversionsverfahren verwendet. Der CRT-Exponent $d_p$ als modulares Inverses des öffentlichen Exponenten $e$ existiert genau dann, wenn $e$ und $p^{-1}$ teilerfremd sind, also wenn $\mathrm{ggT}(p\text{-}1, e) = 1$ gilt. Ist dies nicht der Fall, so erfolgt ein Rücksprung 18 zum Anfang des Verfahrens. Sonst wird der CRT-Exponent $d_p$ in Schritt 16 bestimmt und das Verfahren dann in Schritt 20 mit einem Miller-Rabin-Test der voraussichtlichen Primzahl $p$ fortgesetzt.

Der Miller-Rabin-Test ist also solcher aus dem Artikel "Probabilistic algorithms for testing primality" von Michael O. Rabin, erschienen im Journal of Number Theory 12, 1980, Seiten 128-138, bekannt. Bei jeder Testrunde des Miller-Rabin-Tests wird eine zusammengesetzte Zahl mit gewisser Wahrscheinlichkeit als solche erkannt, während eine Primzahl nie fälschlich als zusammengesetzte Zahl angesehen wird. Die Fehlerwahrscheinlichkeit des Miller-Rabin-Tests hängt von der Anzahl der Testrunden ab und kann, indem hinreichend viele Testrunden ausgeführt werden, beliebig klein gehalten werden.

Wegen der bereits erwähnten hohen Treffsicherheit des Fermat-Tests in Schritt 12 ist die Wahrscheinlichkeit, dass die voraussichtliche Primzahl p bei dem Miller-Rabin-Test in Schritt 20 als zusammengesetzte Zahl erkannt wird, vernachlässigbar. Die Wahrscheinlichkeit, dass die Berechnung des CRT-Exponenten $d_p$ in Schritt 16 wegen $\mathrm{ggT}(p\text{-}1, e) \neq 1$ fehlschlägt und der Rücksprung 18 ausgeführt werden muss, ist dagegen um Größenordnungen höher. Es ist daher effizienter, den Schritt 16 vor Schritt 20 auszuführen, weil dadurch unnötige Miller-Rabin-Tests vermieden werden. Dennoch umfasst die Erfindung auch Ausführungsbeispiele, bei denen der CRT-Exponent $d_p$ erst nach dem Miller-Rabin-Test oder zu einem anderen Zeitpunkt berechnet wird. Ferner kann in Ausführungsalternativen vorgesehen sein, die Berechnung des CRT-Exponenten $d_p$ getrennt von dem hier beschriebenen Verfahren zur Primzahlermittlung auszuführen; der Schritt 16 kann dann weggelassen werden.

Der Miller-Rabin-Test in Schritt 20 wird ausgeführt, um eine gewünschte maximale Fehlerwahrscheinlichkeit, die beispielsweise $2^{-100}$ betragen kann, mathematisch nachweisen zu können. Bei dem Miller-Rabin-Test werden mehrere Testrunden ausgeführt, deren Anzahl von dieser Fehlerwahrscheinlichkeit abhängt. Eine Testrunde für die voraussichtliche Primzahl $p$ besteht darin, dass eine Zufallszahl zur $((p\text{-}1)/2)$-ten Potenz modulo $p$ erhoben wird, und dass geprüft wird, ob das Ergebnis $\pm 1$ modulo $p$ ist. Hierbei wird die Randbedingung $p \equiv 3 \bmod 4$ vorausgesetzt.

In dem höchst unwahrscheinlichen Fall, dass die voraussichtliche Primzahl $p$ bei einer der Testrunden des Miller-Rabin-Tests in Schritt 20 als zusammengesetzte Zahl erkannt wird, erfolgt ein Rücksprung 22 zum Anfang des Verfahrens. Andernfalls wird die Primzahl $p$ als eines der Ergebnisse des hier beschriebenen Verfahrens ausgegeben.

Der zweite Verfahrensteil, der in der rechten Spalte von Fig. 1 gezeigt ist, ist bis auf Schritt 34 eine Wiederholung des ersten Verfahrensteils gemäß der linken Spalte von Fig. 1, wobei die zweite Primzahl $q$ berechnet wird. Es wird daher weitgehend auf die obigen Erläuterungen verwiesen.

Die Schritte 24, 26 und 30 sind analog zu den Schritten 10, 12 und 16. Wenn sich der in Schritt 24 ausgewählte Primzahlkandidat $m$ bei dem Fermat-Test in Schritt 26 als zusammengesetzt erweist, wird ein Rücksprung 28 zur Auswahl eines neuen Primzahlkandidaten in Schritt 24 ausgeführt. Andernfalls wird in Schritt 30 der CRT-Exponent $d_q := e^{-1}$ mod ($q$-1) berechnet. Ein Rücksprung 32 zu Schritt 24 erfolgt, falls $e$ und $q$-1 nicht teilerfremd sind. Andernfalls wird das Verfahren mit der voraussichtlichen Primzahl $q$ fortgesetzt. Ähnlich wie im ersten Verfahrensteil sind auch hier Abwandlungen vorgesehen, bei denen der CRT-Exponent $d_q$ zu einem anderen Zeitpunkt im Zusammenhang mit dem hier beschriebenen Verfahren oder getrennt davon berechnet wird.

In Schritt 34 wird ein kombiniertes Test- und Inversionsverfahren ausgeführt, bei dem eine erste Testrunde eines Miller-Rabin-Tests für die voraussichtliche Primzahl $q$ mit der Berechnung des Inversen $p_{inv} := p^{-1}$ mod $q$ gekoppelt ist. Weil $q$ eine Primzahl ist, kann das Inverse $p_{inv}$ vermöge des kleinen Fermat'schen Satzes als $p_{inv} = p^{-1} = p^{q-2}$ mod $q$ bestimmt werden. Weil $p$ eine Zufallszahl ist, kann bei dieser Berechnung mit geringem Mehraufwand sogleich eine erste Miller-Rabin-Testrunde für die voraussichtliche Primzahl $q$ ausgeführt werden, wobei geprüft wird, ob die (($q$-1)/2)-te Potenz von $p$ modulo $q$ gleich $\pm 1$ ist.

In Schritt 34 erfolgt ein Rücksprung 36 zu Schritt 24, falls die voraussichtliche Primzahl $q$ die erste Miller-Rabin-Testrunde nicht besteht. Andernfalls werden in Schritt 38 die weiteren noch erforderlichen Testrunden des Miller-Rabin-Tests ausgeführt. Schlägt eine dieser Testrunden fehl, so erfolgt ein Rücksprung 40 nach Schritt 24 zur Auswahl eines neuen Primzahlkandidaten. Andernfalls steht die zweite Primzahl $q$ fest, und das Verfahren endet.

In manchen Ausführungsformen ist das in Fig. 1 gezeigte Verfahren dahingehend abgewandelt, dass statt des Schritts 36 eine zusätzliche Runde des Miller-Rabin-Tests in Schritt 38 ausgeführt werden. Die Berechnung des Inversen $p_{inv}$ kann dann als separater Schritt - als Teil des hier beschriebenen Verfahrens oder getrennt davon - ausgeführt werden, sofern eine solche Berechnung überhaupt erforderlich ist. So dient beispielsweise das Inverse $p_{inv}$ bei RSA-CRT-Berechnungen lediglich zur Effizienzsteigerung. Bei RSA-Berechnungen ohne Verwendung des Chinesischen Restklassensatzes wird das Inverse $p_{inv}$ gar nicht gebraucht.

Fig. 2 veranschaulicht die Bestimmung eines Primzahlkandidaten $m$, wie sie in den Schritten 10 und 24 von Fig. 1 ausgeführt wird. In den vorliegend beschriebenen Ausführungsbeispielen wird hierbei ein Kandidatenfeld verwendet, das mehrere Primzahlkandidaten $m$ bereitstellt. Das Kandidatenfeld kann beispielsweise ein gepacktes Bitfeld (*bit array*) $S$ sein, dessen Bits $S[i]$ angeben, ob eine Zahl, die einen von der Bitposition $i$ abhängigen Versatz von einem Basiswert $b$ aufweist, ein Primzahlkandidat $m$ ist oder nicht.

Bei dem Verfahren gemäß Fig. 2 wird zunächst in Test 42 überprüft, ob ein geeignetes und nicht-leeres Kandidatenfeld vorhanden ist. Wenn dies nicht der Fall ist, wird in Schritt 44 ein zufälliger Basiswert $b$ erzeugt, der die Bedingungen $b \equiv 3$ mod 4 erfüllt.

In Schritt 46 wird dann das Kandidatenfeld erzeugt. Als Datenstruktur für das Kandidatenfeld wird im vorliegenden Ausführungsbeispiel ein Bitfeld $S$ verwendet, dessen Bitpositionen $i$ jeweils einem Versatz von 4 zum Basiswert $b$ entsprechen. Jedes Bit $S[i]$ des fertiggestellten Kandidatenfeldes zeigt somit an, ob die Zahl $b+4$ als Primzahlkandidat $m$ verwendet werden kann oder nicht.

Zur Erzeugung des Kandidatenfeldes in Schritt 46 werden zunächst alle Bits $S[i]$ auf einen ersten Wert - z.B. den Wert "1" - initialisiert. Dann werden nach dem Prinzip des Siebes des Eratosthenes diejenigen Bits $S[i]$ auf einen zweiten Wert - z.B. den Wert "0" - geändert, die einer durch eine kleine Primzahl teilbaren Zahl $b+4$ entsprechen. Die Größe des Kandidatenfeldes und die Anzahl der Siebdurchläufe werden - in Abhängigkeit von dem verfügbaren Speicherplatz - so gewählt, dass die durchschnittliche Laufzeit des Gesamtverfahrens minimiert wird. Dies ist eine Optimierungsaufgabe, deren Lösung von dem relativen Aufwand für die Vorauswahl verglichen mit dem Aufwand für einen fehlgeschlagenen Fermat-Test abhängt. Für RSA-Schlüssel mit 2048 Bit können beispielsweise mehrere Tausend Siebdurchläufe ausgeführt werden, wobei dann ungefähr 40 Fermat-Tests zur Bestimmung einer der Primzahlen $p$ und $q$ erforderlich sind.

In Schritt 48 wird schließlich ein Primzahlkandidat $m$ aus dem gefüllten Kandidatenfeld ausgewählt. Diese Auswahl kann beispielsweise zufällig oder nach einer vorgegebenen Reihenfolge erfolgen. Bei weiteren Aufrufen des in Fig. 2 gezeigten Verfahrens wird Schritt 48 unmittelbar nach dem Test 42 ausgeführt, und es werden so lange weitere Primzahlkandidaten $m$ aus dem einmal angelegten Kandidatenfeld ausgewählt, bis das Feld leer ist oder eine vorgegebene Mindestfüllmenge unterschritten wird.

Das in Fig. 1 und Fig. 2 gezeigte Verfahren wird in manchen Ausführungsformen von mindestens einem Prozessor eines tragbaren Datenträgers ausgeführt. Fig. 3 zeigt einen solchen Datenträger 50, der beispielsweise als Chipkarte oder Chipmodul ausgestaltet ist. Der Datenträger 50 weist einen Mikrocontroller 52 auf, in dem in an sich bekannter Weise ein Hauptprozessor 54, ein Koprozessor 56, eine Kommunikationsschnittstelle 58 und eine Speicherbaugruppe 60 auf einem einzigen Halbleiterchip integriert und über einen Bus 62 miteinender verbunden sind.

Die Speicherbaugruppe 60 weist mehrere in unterschiedlichen Technologien ausgestaltete Speicherfelder auf, die beispielsweise einen Festwertspeicher 64 (maskenprogrammiertes ROM), einen nicht-flüchtigen überschreibbaren Speicher 66 (EEPROM oder Flash-Speicher) und einen Arbeitsspeicher 68 (RAM) umfassen. Die hier beschriebenen Verfahren sind in Form von Programmbefehlen 70 implementiert, die im Festwertspeicher 64 und zum Teil auch im nicht-flüchtigen überschreibbaren Speicher 66 enthalten sind.

Der Koprozessor 56 des Datenträgers 50 ist zur effizienten Ausführung diverser kryptographischer Operationen ausgelegt. Insbesondere ist für die hier beschriebenen Ausführungsbeispiele relevant, dass der Koprozessor 56 die Montgomery-Multiplikation mit Bitlängen, wie sie für kryptographische Anwendungen benötigt werden, unterstützt. In den meisten Ausgestaltungen unterstützt der Koprozessor 56 keine "normale" modulare Multiplikation, so dass derartige Multiplikationen mit erheblich höherem Aufwand durch den Hauptprozessor 54 ausgeführt werden müssen.

Für natürliche Zahlen $x$, $y$ und eine ungerade natürliche Zahl $m$ mit $x$, $y < m$ sowie eine Zweierpotenz $R$ mit $R > m$ ist das Montgomery-Produkt von $x$ und $y$ modulo $m$ bezüglich $R$ allgemein wie folgt definiert:

$$x *_{m,R} y \;:=\; x \cdot y \cdot R^{-1} \bmod m$$

Allgemein wird im vorliegenden Dokument bei der Angabe einer Modulo-Beziehung der Form "$a = z \bmod m$" das Gleichheitszeichen "=" bzw. das Definitionszeichen ":=" verwendet, um auszudrücken, dass $a$ das eindeutig definierte Element aus $(z + \mathbb{Z}) \cap [0, ..., m[$ ist, für das die Modulo-Beziehung gilt. Die Schreibweise "$a \equiv z \bmod m$" drückt dagegen lediglich aus, dass die Äquivalenz modulo $m$ gilt.

Wenn sich der Montgomery-Parameter $R$ aus dem Kontext ergibt, wird im vorliegenden Dokument oft auch die abgekürzte Schreibweise $x*_m y$ statt der ausführlichen Schreibweise $x*_{m,R}y$ für das Montgomery-Produkt verwendet.

Obwohl die oben definierte Montgomery-Multiplikation eine modulare Operation ist, kann sie ohne Division implementiert werden, wie dies an sich gut bekannt und z.B. in dem eingangs genannten Artikel "*Modular multiplication without trial division*" beschrieben ist. Für eine Montgomery-Multiplikation werden zwei nicht-modulare Multiplikationen, ein vorab in Abhängigkeit von $m$ und $R$ berechneter Hilfswert, einige Additionen und eine abschließende bedingte Subtraktion von $m$ benötigt. Diese Berechnungen können durch den Koprozessor 56 effizient ausgeführt werden.

Bei gegenwärtig kommerziell verfügbaren Mikrocontrollern 52 sind Ausgestaltungen von Koprozessoren 56', 56", 56"' bekannt, die nicht genau die oben definierte Montgomery-Multiplikation, sondern Abwandlungen davon ausführen. Der Grund für diese Abwandlungen liegt primär darin, dass die Entscheidung, ob die abschließende bedingte Subtraktion der Montgomery-Multiplikation ausgeführt werden soll, auf unterschiedliche Weisen optimiert werden kann. Allgemein liefern die abgewandelten Koprozessoren 56', 56", 56"' bei der Berechnung der Montgomery-Multiplikation ein Ergebnis, das sich von dem oben definierten Ergebnis potentiell um ein kleines Vielfaches des Moduls $m$ unterscheidet. Ferner ist der zulässige Wertebereich für die Faktoren $x$ und $y$ bei den abgewandelten Koprozessoren 56', 56", 56"' derart erweitert, dass ein berechnetes Ergebnis stets wieder einen zulässigen Eingabewert als Faktor der Montgomery-Multiplikation darstellt.

Genauer berechnet ein erster abgewandelter Koprozessor 56' ein erstes abgewandeltes Montgomery-Produkt $x*'_m y$, das wie folgt definiert ist:

$$x *'_m y \;:=\; (x \cdot y \cdot R^{-1} \bmod m) + k \cdot m$$

Hierbei beträgt $R = 2^n$ für bestimmte Registergrößen $n$, die Vielfache von 16 sind. Der Wertebereich für die Faktoren $x$ und $y$ ist auf $[0,...,R-1]$ erweitert, und $k$ ist eine natürliche Zahl, die so klein ist, so dass $x*'_m y < R$ gilt.

Ein zweiter abgewandelter Koprozessor 56" berechnet dagegen ein zweites abgewandeltes Montgomery-Produkt $x*"_m y$, das wie folgt definiert ist:

$$x *''_m y \;:=\; (x \cdot y \cdot 2^{-n'} \bmod m) - \varepsilon \cdot m$$

Die Faktoren $x$ und $y$ sind hierbei ganze Zahlen im Bereich $-m \le x, y < m$. Ferner gilt $\varepsilon \in \{0, 1\}$, und der Exponent $n'$ hat den Wert $n' = n + 16p$ für eine Präzision $p = 1$, 2 oder 4, eine Blockgröße $c$ mit $160 \le c \le 512$, die ein Mehrfaches von 32 ist, und eine Registergröße $n = c \cdot p$. Für den Modul $m$ gilt $m < 2^n$, und der Wert $R$ ist als $R := 2^{n'}$ definiert.

Ein dritter abgewandelter Koprozessor 56"' berechnet schließlich ein drittes abgewandeltes Montgomery-Produkt $x*"'_m y$, das wie folgt definiert ist:

$$x *'''_m y \;:=\; (x \cdot y \cdot 2^{-t \cdot c} \bmod m) + \varepsilon \cdot m$$

Die Faktoren $x$ und $y$ sind hierbei natürliche Zahlen mit $x < 2^{t \cdot c}$ und $y < 2 \cdot m$. Ferner gilt $\varepsilon \in \{0, 1\}$. Die Blockgröße $c$ ist fest und beträgt $c = 128$. Die Registergröße für den Faktor $x$ beträgt $t \cdot c$. Die Registergröße für die anderen Variablen wird mit $n$ bezeichnet und beträgt ein Vielfaches der Blockgröße $c$. Wenn $n = t \cdot c$ gilt, dann braucht der Faktor $x$ statt der Bedingung $x < 2^{t \cdot c}$ lediglich der Bedingung $x < \max\{2 \cdot m, 2^n\}$ zu genügen.

Das vorliegende Verfahren ist auch bei anderen abgewandelten Koprozessoren 56'''' anwendbar.

Im vorliegenden Dokument wird das Montgomery-Produkt zweier Faktoren $x$ und $y$ bezüglich des Moduls $m$ allgemein durch $x*_m y$ bezeichnet, wenn es keine Rolle spielt oder aus dem Kontext hervorgeht, ob es sich um genau das Montgomery-Produkt $x*_m y$ des Koprozessors 56 gemäß der ursprünglich gegebenen Definition oder eines der drei abgewandelten Montgomery-Produkte $x*'_m y$ bzw. $x*''_m y$ bzw. $x*'''_m y$ eines der Koprozessoren 56', 56'', 56''' handelt.

Generell kann jede "normale" modulare Multiplikation $x \cdot y = z \bmod m$ durch eine Montgomery-Multiplikation $x*_m y' = z'$ ersetzt werden, wenn die Eingangswerte $x$, $y$ zunächst mittels je einer Montgomery-Transformation in ihre entsprechenden Montgomery-Repräsentationen $x'$, $y'$ umgewandelt werden und dann der Ergebniswert von seiner Montgomery-Repräsentation $x'$ zum Wert $x$ zurücktransformiert wird. Die Montgomery-Transformation kann beispielsweise durch die Berechnung $x' := x \cdot R \bmod m$ erfolgen. Bei der Rücktransformation kann das Ergebnis $z := z' \cdot R^{-1} \bmod m$ effizient durch eine Montgomery-Multiplikation mit dem Faktor 1, also durch die Berechnung $z := z'*_m 1$, bestimmt werden.

Wegen der erforderlichen Hin- und Rücktransformationen ist es in der Regel nicht effizient, eine einzige modulare Multiplikation durch eine Montgomery-Multiplikation zu ersetzen. Wenn aber mehrere Multiplikationen nacheinander ausgeführt werden sollen - wie dies beispielsweise bei einer modularen Potenzierung der Fall ist -, dann können diese Multiplikationen vollständig im Montgomery-Zahlenraum durchgeführt werden. Es ist dann nur eine einzige Hintransformation am Anfang der Berechnungssequenz und eine einzige Rücktransformation am Ende der Berechnungssequenz erforderlich.

Nach dem gerade beschriebenen Prinzip können bei dem in Fig. 1 und Fig. 2 gezeigten Verfahren einige oder alle modulare Multiplikationen als Montgomery-Multiplikationen implementiert werden. Es versteht sich, dass hierbei Berechnungsabschnitte, die im Montgomery-Zahlenraum erfolgen, möglichst zusammengefasst werden sollten, um die Anzahl der erforderlichen Hin- und Rücktransformationen zu reduzieren. Additionen und Subtraktionen können ohne Unterschied im "normalen" Zahlenraum und im Montgomery-Zahlenraum ausgeführt werden.

Die Verwendung von Montgomery-Multiplikationen ist besonders vorteilhaft, wenn der Datenträger 50 einen Koprozessor 56, 56', 56'', 56''' aufweist, der zwar die Montgomery-Multiplikation, nicht aber die normale modulare Multiplikation unterstützt. Auch wenn der Koprozessor 56, 56', 56'', 56''' beide Multiplikationsarten unterstützt, wird die Montgomery-Multiplikation häufig effizienter ausgeführt. Je nach der Anzahl der erforderlichen Transformationen - insbesondere der im Vergleich zu den Rücktransformationen aufwendigeren Hintransformationen - ergibt sich eine erhebliche Ersparnis sogar dann, wenn eine Montgomery-Multiplikation nur geringfügig effizienter als eine normale modulare Multiplikation ausgeführt werden sollte.

In den hier beschriebenen Ausführungsbeispielen ist das in Fig. 1 und Fig. 2 gezeigte Verfahren insbesondere im Hinblick auf die in den Schritten 12 und 28 ausgeführten Fermat-Tests optimiert. Es versteht sich, dass die im folgenden beschriebenen Ausgestaltungen eines effizienten Fermat-Tests nicht auf den Verfahrensablauf gemäß Fig. 1 und Fig. 2 beschränkt sind, sondern dass sie in Ausführungsalternativen auch für andere Anwendungszwecke, bei denen ein Primzahltest vorgenommen wird, vorgesehen sind.

Wie oben bereits erwähnt, wird bei dem Fermat-Test überprüft, ob für einen Primzahlkandidat $m$ und eine natürliche Zahl $a$ die Beziehung $a^m \equiv a \bmod m$ gilt. Alternativ kann auch die Beziehung $a^{(m-1)} \equiv 1 \bmod m$ überprüft werden, was einen geringfügig geringeren Rechenaufwand verursacht. Als weitere Alternative kann geprüft werden, ob für den Wert $m'$, der sich aus dem ungeraden Primzahlkandidat $m$ (und somit dem geraden Wert $m-1$) durch eine Verschiebung um eine Binärstelle nach rechts ergibt, die Beziehung $a^{m'} \equiv \pm 1 \bmod m$ gilt (auch: m'=(m-1)/2).

In den drei genannten Fällen muss eine Potenzberechnung modulo $m$ mit einem ganzzahligen und positiven Exponenten ausgeführt werden, der entweder genauso lang wie $m$ oder eine Binärstelle kürzer als $m$ ist. Wenn hierfür das an sich bekannte Quadriere-und-Multipliziere-Verfahren (*square and multiply method*) verwendet wird, so ist der Rechenaufwand für eine solche Potenzberechnung proportional zur dritten Potenz der Länge von $m$.

Bei einem Ausführungsbeispiel des Verfahrens gemäß Fig. 1 und Fig. 2 können beispielsweise, wie bereits erwähnt, im Durchschnitt ungefähr 40 Fermat-Tests zur Bestimmung jeder der beiden Primzahlen $p$ und $q$ für einen RSA-Schlüssel mit 2048 Bit erforderlich sein. In der Praxis heißt dies, dass ein Großteil der Gesamtrechenzeit des Verfahrens gemäß Fig. 1 und Fig. 2 für die Fermat-Tests in den Schritten 12 und 26 aufgewendet wird. Dieses Verhältnis ändert sich auch bei anderen RSA-Schlüssellängen nicht, weil die durchschnittliche Anzahl der benötigten Fermat-Tests linear mit der Bitlänge des RSA-Schlüssels ansteigt.

In den hier beschriebenen Ausführungsbeispielen wird der Fermat-Test bei Verwendung von Montgomery-Multiplikationen optimiert. Hierbei wird als Basis $a$ - bei einer Schreibweise der Potenzierung mit einem positiven und ganzzahligen Exponenten - ein gebrochenzahliger Wert mit einer Zweierpotenz im Nenner, beispielsweise der Wert $(2m+1)/2 = \frac{1}{2} \bmod m$, verwendet. Durch diese Maßnahmen kann der Rechenaufwand für einen Fermat-Test um ein Viertel reduziert werden, und zwar verglichen mit einer Implementierung, bei der die Potenzberechnung des Fermat-Tests zu einer beliebigen Basis *a* mittels eines Quadriere-und-Multipliziere-Verfahrens erfolgt. Auf die Einzelheiten der Potenzierung mittels Montgomery-Operationen wird später eingegangen.

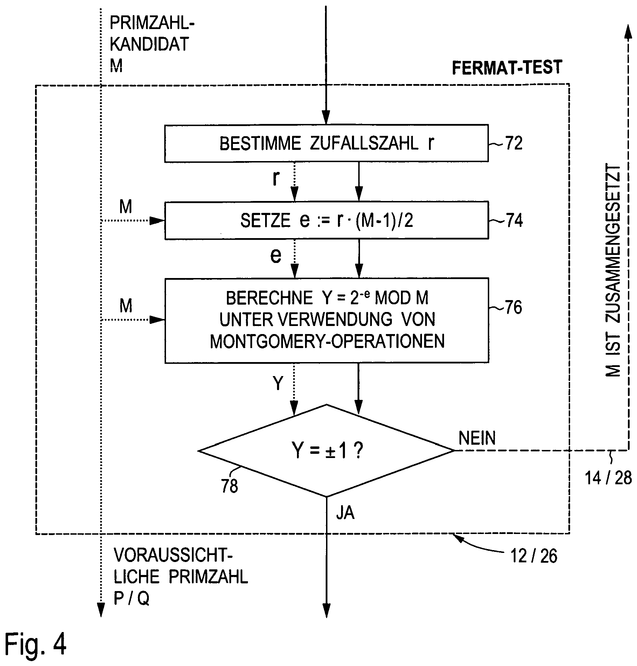

Fig. 4 zeigt eine beispielhafte Implementierung des Fermat-Tests, wie er in machen Ausgestaltungen in den Schritten 12 und 26 von Fig. 1 ausgeführt wird. Wie bereits erwähnt, erfolgt bei dem Fermat-Test eine Potenzberechnung mit einem Exponenten *e*, der von dem geheim zu haltenden Primzahlkandidaten *m* abhängt. Daher muss auch der Exponent *e* geheim gehalten werden. Insbesondere sollen Nebenkanalangriffe wie z.B. DPA-Angriffe, bei denen Informationen über eine Vielzahl von Berechnungsabläufen gesammelt und statistisch ausgewertet werden, erschwert werden. Es ist daher bei dem in Fig. 4 gezeigten Ausführungsbeispiel vorgesehen, den Exponenten e mittels einer kleinen Zufallszahl *r* zu maskieren. Hierzu wird in Schritt 72 eine geeignete Zufallszahl *r* bestimmt, und in Schritt 74 wird der Exponent *e* als das Produkt der Maskierungszahl *r* mit dem Wert (*m*-1)/2, der dem um eine Binärstelle nach rechts verschobenen Primzahlkandidaten *m* entspricht, bestimmt.

Die Maskierung des Exponenten verringert die Aussagekraft des Fermat-Tests geringfügig, aber sie hat neben dem gesteigerten Ausspähungsschutz noch einen weiteren Vorteil, der später erläutert wird.

In Schritt 76 wird dann die Potenzberechnung mit der Basis ½ durchgeführt, und in Schritt 78 wird geprüft, ob das Ergebnis den Wert ±1 hat. Ist dies der Fall, so ist der Fermat-Test erfolgreich beendet. Andernfalls erfolgt der Rücksprung 14 bzw. 28 zur Auswahl eines neuen Primzahlkandidaten.

Wie in Fig. 4 dargestellt, wird die Potenzberechnung in Schritt 76 unter Verwendung von Montgomery-Operationen - darunter sind insbesondere Montgomery-Multiplikationen und Montgomery-Quadrierungen zu verstehen - ausgeführt. Mehrere Varianten eines geeigneten Verfahrens werden im folgenden beschrieben. Zum besseren Verständnis wird jedoch zunächst ein Vergleichsverfahren dargestellt, das "normale" modulare Multiplikationen $a*_M b := a \cdot b \bmod M$ - wie sie beispielsweise durch den Hauptprozessor 54 des Datenträgers 50 oder durch einen geeigneten Koprozessor ausgeführt werden - verwendet. Bei dem Vergleichsverfahren wird die Potenzierung mittels der bereits erwähnten Quadriere-und-Multipliziere-Technik ausgeführt, bei der für jedes Bit des Exponenten eine Quadrierung eines Zwischenergebnisses und - in Abhängigkeit von dem Wert des Exponentenbits - ferner eine Multiplikation des Zwischenergebnisses mit der zu potenzierenden Basis erfolgt.

Bei dem Vergleichsverfahren ist vorgesehen, den Fermat-Test mit der Basis *a* = 2 auszuführen. Die Multiplikationen der Quadriere-und-Multipliziere-Technik sind dann lediglich Verdopplungen des Zwischenergebnisses und können durch eine Verschiebung des Zwischenergebnisses um ein Bit nach links implementiert werden. Der Aufwand hierfür ist vernachlässigbar. Der Aufwand für die Quadrierungen ändert sich durch die Wahl der Basis 2 nicht. Da bei einem zufälligen Exponenten im Durchschnitt ungefähr doppelt so viele Quadrierungen wie Multiplikationen erforderlich sind, sinkt der Aufwand für einen Fermat-Test um ein Drittel, wenn die Basis 2 verwendet wird.

Das gerade beschriebene Vergleichsverfahren ist aber potentiell für Nebenkanalangriffe anfällig, wenn sich durch Messung des Stromverbrauchs oder sonstiger Parameter des Datenträgers 50 feststellen lässt, ob bei der Verarbeitung eines Bits des Exponenten das Zwischenergebnis verdoppelt - also nach links verschoben - wird oder nicht. Manche Koprozessoren stellen besondere Befehle bereit, die solche Angriffe verhindern. Falls keine geeigneten Befehle zur Verfügung stehen, wird hier eine Modifikation des Vergleichsverfahrens vorgeschlagen, die als "Quadriere-achtmal-und-Multipliziere-einmal-Verfahren" bezeichnet werden könnte.

Bei der gerade genannten Modifikation werden jeweils acht Quadrierungen ausgeführt, aber die dazugehörigen potentiellen Multiplikationen zu je einer einzigen Multiplikation zusammengefasst. Die Exponentenbits für die aufgeschobenen Multiplikationen werden jeweils in einem Byte $e_i$ gesammelt, und die durchgeführte Multiplikation erfolgt dann mit dem Faktor $2^{e_i}$. Insgesamt lässt sich dieses Verfahren mit der folgenden Pseudocode-Notation beschreiben:

## Verfahren 1

| | |
|---|---|
| **Eingabewerte:** | Exponent $e = e_0 + e_1 \cdot 256 + \ldots + e_n \cdot 256^n$ |
| | Modul im Register **M** |
| **Register:** | **M, X, Y** |
| **Ausgabewert:** | Potenz $2^e$ mod **M** in Register **Y** |
| **Verfahrensablauf:** | |

| | |
|---|---|
| SETZE **Y** $= 2^{e_n}$ | (1.1) |
| FÜR $i = n-1$ HERUNTERZÄHLEND BIS 0 | (1.2) |
| FÜHRE 8 MAL AUS | (1.3) |
| SETZE **Y** *= **Y** mod **M** | (1.4) |
| ENDE | (1.5) |
| SETZE **X** $= 2^{e_i}$ | (1.6) |
| SETZE **Y** *= **X** mod **M** | (1.7) |
| ENDE | (1.8) |

In der obigen Pseudonotation bedeutet die Schreibweise **A** *= **B** mod **M**, dass der Inhalt des Registers **A** durch **A**·**B** mod **M** ersetzt wird. Die Register **M**, **X** und **Y** haben jeweils eine Größe von mindestens 256 Bit. Die Werte $e_i$ stellen für $0 \le i \le n$ die "Ziffern" des Exponenten e in einem Stellenwertsystem mit der Basis 256 dar; es gilt also $0 \le e_i \le 255$.

In Zeile (1.1) erfolgt die Initialisierung des Registers **Y**. Für jedes Byte des Exponenten e wird dann ein Schleifendurchlauf ausgeführt, der jeweils die Zeilen (1.3)-(1.7) umfasst. Hierbei wird in den Zeilen (1.3) und (1.4) der Inhalt des Registers **Y** achtmal quadriert. In den Zeilen (1.6) und (1.7) erfolgt eine Multiplikation des Zwischenergebnisses im Register **Y** mit dem Faktor $2^{e_i}$. Die Potenzberechnungen in den Zeilen (1.1) und (1.6) können effizient dadurch ausgeführt werden, dass z.B. zur Berechnung von **A** = $2^{e_k}$ zunächst das Register **A** auf Null gesetzt wird, und dann das ($k$+1)-te Bit - gerechnet vom geringstwertigen Bit aus - zu einer "1" invertiert wird.

Das obige Verfahren 1 ist sicher gegen Nebenkanalangriffe, sofern Multiplikationen mit unterschiedlichen Zweierpotenzen durch einen Angreifer nicht unterschieden werden können. Wird dieses Verfahren für einen Fermat-Test mit der Basis 2 eingesetzt, so kann dadurch der Rechenaufwand - verglichen mit einem Fermat-Test, bei dem die Potenzberechnung zu einer beliebigen Basis a erfolgt - um ein Viertel verringert werden.

Der Erfinder hat erkannt, dass das gerade beschriebene Verfahren 1 so weitergebildet werden kann, dass es Montgomery-Multiplikationen verwendet und somit effizient auf Datenträgern 50 mit geeigneten Koprozessoren 56, 56', 56", 56'" ausführbar ist. Überraschenderweise ist dies mit relativ geringen Modifikationen des Verfahrensablaufs möglich. Insbesondere wird bei dem weitergebildeten Verfahren, das im folgenden als "Verfahren 2" bezeichnet wird, eine negative Zweierpotenz als Ergebnis berechnet, also $2^{-e} = (1/2)^e$ statt des beim Verfahren 1 berechneten Wertes $2^e$. Ferner ist in Verfahren 2 ein zusätzlicher Schritt vorgesehen, in dem der Exponent e geeignet umcodiert wird, um die Verwendung der Montgomery-Operationen statt der "normalen" modularen Multiplikationen und Quadrierungen in Verfahren 1 auszugleichen.

Ebenso wie bei Verfahren 1 werden bei Verfahren 2 zwei Register **X** und **Y** sowie ein konstantes drittes Register **M** für den Modul m verwendet. Das Register **Y** hat dieselbe Größe wie **M**, während das Register **X** gegebenenfalls kleiner sein kann. Alle drei Register weisen mindestens 256 Bit auf, und der Modul m beträgt mindestens $2^{255}$.

Das Verfahren 2 ist für alle oben genannten Koprozessoren 56, 56', 56", 56'" verwendbar. Diese Universalität wird dadurch erreicht, dass das Verfahren 2 nur zwei generische Montgomery-Befehle verwendet, die auf allen üblichen Plattformen verfügbar sind. Diese Befehle sind erstens die Montgomery-Quadrierung des Registers **Y** und zweitens die Montgomery-Multiplikation der Register **X** und **Y**. Bei der Montgomery-Quadrierung wird der Wert des Registers **Y** durch $\mathbf{Y} *_{m,R} \mathbf{Y}$ ersetzt. Diese Montgomery-Quadrierung wird im folgenden durch den Pseudocode-Befehl "SETZE **Y** *= **Y***$R^{-1}$ mod **M**" ausgedrückt. Die Montgomery-Multiplikation, bei der der Wert des Registers **Y** durch $\mathbf{X} *_{m,R} \mathbf{Y}$ ersetzt wird, wird folgenden durch den Pseudocode-Befehl "SETZE **Y** *= **X**\*$R^{-1}$ mod **M**" ausgedrückt.

Ferner wird im Verfahren 2 ein Register (entweder **X** oder **Y**) der Breite $r$ mit einer Zweierpotenz $2^k$ mit $0 \leq k < r$ initialisiert. Dieser Vorgang wird durch den Pseudocode-Befehl "SETZE **Z** = $2^k$" ausgedrückt. Das Verfahren 2 lässt sich dann wie folgt beschreiben:

### Verfahren 2

| | |
|---|---|
| **Eingabewerte:** | Exponent $e = e_0 + e_1 \cdot 256 + ... + e_n \cdot 256^n$ |
| | Modul im Register **M** |
| **Register:** | **M, X, Y** |
| **Ausgabewert:** | Potenz $2^{-e}$ mod **M** in Register **Y** |

**Verfahrensablauf:**

$$\text{FÜHRE "VERFAHREN 3" AUS} \hspace{3cm} (2.0)$$

$$\text{(Erzeugt aus Exponent } e \text{ einen umcodierten}$$

$$\text{Exponenten } f \text{ mit } f = f_0 + f_1 \cdot 256 + ... + f_n \cdot 256^n)$$

$$\text{SETZE } \mathbf{Y} = 2^{f_n} \hspace{4cm} (2.1)$$

$$\text{FÜR } i = n-1 \text{ HERUNTERZÄHLEND BIS } 0 \hspace{1cm} (2.2)$$

$$\text{FÜHRE 8 MAL AUS} \hspace{3cm} (2.3)$$

$$\text{SETZE } \mathbf{Y} \text{ *= } \mathbf{Y} * R^{-1} \text{ mod } \mathbf{M} \hspace{1.5cm} (2.4)$$

$$\text{ENDE} \hspace{5cm} (2.5)$$

$$\text{SETZE } \mathbf{X} = 2^{f_i} \hspace{4cm} (2.6)$$

$$\text{SETZE } \mathbf{Y} \text{ *= } \mathbf{X} * R^{-1} \text{ mod } \mathbf{M} \hspace{2cm} (2.7)$$

$$\text{ENDE} \hspace{5cm} (2.8)$$

Bis auf den vorbereitenden Schritt in Zeile (2.0) entspricht die Struktur des Verfahrens 2 genau der Struktur von Verfahren 1. Nach der Initialisierung des Registers **Y** in Zeile (2.1) wird wiederum eine Schleife mit den Zeilen (2.3)-(2.7) als Schleifenkörper ausgeführt. In den Zeilen (2.3) und (2.4) wird dabei eine achtmalige Montgomery-Quadrierung des Zwischenergebnisses im Register **Y** ausgeführt, und in den Zeilen (2.6) und (2.7) erfolgt eine Montgomery-Multiplikation des Registers **Y** mit dem Faktor $2^{f_i}$. Die Verfahren 1 und 2 unterscheiden sich also lediglich durch die Umcodierung des Exponenten in Schritt (2.0) und dadurch, dass Montgomery-Multiplikationen und -Quadrierungen statt normaler modularer Multiplikationen und Quadrierungen verwendet werden.

In einer Abwandlung des oben beschriebenen Verfahrens 2 können die beiden Zeilen (2.6) und (2.7) zu einem einzigen Befehl zusammengefasst werden, in dem der Wert des Registers **Y** durch das Produkt $Y \cdot 2^{f_i - n'}$ mod **M** ersetzt wird; hierbei ist $n'$ der binäre Logarithmus des Montgomery-Parameters $R$, so dass $R = 2^{n'}$ gilt. In der hier verwendeten Pseudonotation könnte dieser zusammengefasste Befehl mit "SETZE **Y** *= $2^{f_i}*2^{-n'}$ mod **M**" ausgedrückt werden.

Das Ergebnis des Verfahrens 2 kann für manche der hier behandelten Koprozessoren 56, 56', 56'', 56''' gegebenenfalls um ein kleines Vielfaches des Moduls **M** von dem gewünschten Endergebnis $2^{-e}$ mod **M** abweichen. Es kann daher erforderlich sein, als abschließenden Korrekturschritt eine modulare Reduktion des Registers **Y** modulo **M** auszuführen.

Im hier beschriebenen Ausführungsbeispiel erfolgt die Umcodierung des Exponenten $e$ in Zeile (2.0) gemäß dem folgenden Verfahren:

## Verfahren 3

**Eingabewerte:** Exponent $e = e_0 + e_1 \cdot 256 + \ldots + e_n \cdot 256^n$

Logarithmus $n'$ des Montgomery-Parameters $R$

zur Basis 2 (es gilt also $R = 2^{n'}$)

**Ausgabewert:** Umcodierter Exponent $f = f_0 + f_1 \cdot 256 + \ldots + f_n \cdot 256^n$

zur Verwendung in Verfahren 2

**Verfahrensablauf:**

$$\text{SETZE } f = n' \cdot (256 + 256^2 + 256^3 + \ldots + 256^n) - e \qquad (3.1)$$

$$\text{SPEICHERE } f_0, f_1, \ldots, f_n \qquad (3.2)$$

$$\text{MIT } f = f_0 + f_1 \cdot 256 + \ldots + f_n \cdot 256^n \qquad (3.3)$$

$$\text{UND } 0 \leq f_i < 256 \ \text{ FÜR } \ 0 \leq i < n \qquad (3.4)$$

Durch die folgende Argumentation lässt sich veranschaulichen, dass das Verfahren 2 mit der Umcodierung des Exponenten e gemäß Verfahren 3 das korrekte Ergebnis liefert: Zunächst ist zu bemerken, dass während des Verfahrensablaufs alle Werte in den Registern **X** und **Y** stets modulare Zweierpotenzen (mit Modul **M**) sind, weil die Register mit Zweierpotenzen initialisiert werden, und weil die Montgomery-Operationen als modulare Multiplikationen mit (gegebenenfalls negativen) Zweierpotenzen als Faktoren geschrieben werden können. Die ausgeführten Berechnungen können daher übersichtlicher in Form ihrer Logarithmen zur Basis 2 bezüglich des Moduls **M** geschrieben werden.

Für $\mathbf{Y} = 2^y$ und $R = 2^{n'}$ lässt sich die Montgomery-Quadrierung in Zeile (2.4) als Verdopplung und Subtraktion schreiben, bei der $y$ durch $2 \cdot y - n'$ ersetzt wird (Operation "$S$"). Die kombinierte Operation aus den Zeilen (2.7) und (2.8), die auf Registerebene als "SETZE **Y** $*= 2^k * 2^{-n'}$ mod **M**" geschrieben werden kann, ersetzt in der logarithmischen Darstellung $y$ durch $y + k - n'$ (Operation "$M_k$").

In Verfahren 2 wird die Operation $S$ jeweils achtmal ausgeführt und dann die kombinierte Operation $M_k$ einmal ausgeführt. In der logarithmischen Schreibweise lässt sich dieser Verfahrensablauf wie folgt darstellen:

$$y \quad \rightarrow_S \quad 2 \cdot y - n' \quad \rightarrow_S \quad 4 \cdot y - 3 \cdot n' \quad \rightarrow_S \quad 8 \cdot y - 7 \cdot n' \quad \rightarrow_S \quad \ldots$$

$$\ldots \quad \rightarrow_S \quad 256 \cdot y - 255 \cdot n' \quad \rightarrow_{M_k} \quad 256 \cdot (y - n') + k$$

Um eine geeignete Umcodierung des Exponenten $e$ darzustellen, müssen die Bytes $f_n, f_{n-1}, \ldots, f_0$ des umcodierten Exponenten $f$ die Eigenschaft aufweisen, dass die im folgenden definierte Sequenz $y_n, y_{n-1}, \ldots, y_0$ das Ergebnis $y_0 = -e$ ergibt; die Hintereinanderschaltung von Funktionen wird durch das Symbol "$\circ$" ausgedrückt:

$$y_n := f_n$$

$$y_i := M_{f_i} \circ S^8 (y_{i+1}) = 256 \cdot (y_{i+1} - n') + f_i \quad \text{für} \quad i = n-1, \ldots, 0$$

Es lässt sich durch Induktion über $n$ zeigen, dass die in Verfahren 3 definierte Umcodierung die gerade genannte Eigenschaft aufweist und somit zu einem korrekten Ergebnis des Verfahrens 2 führt.

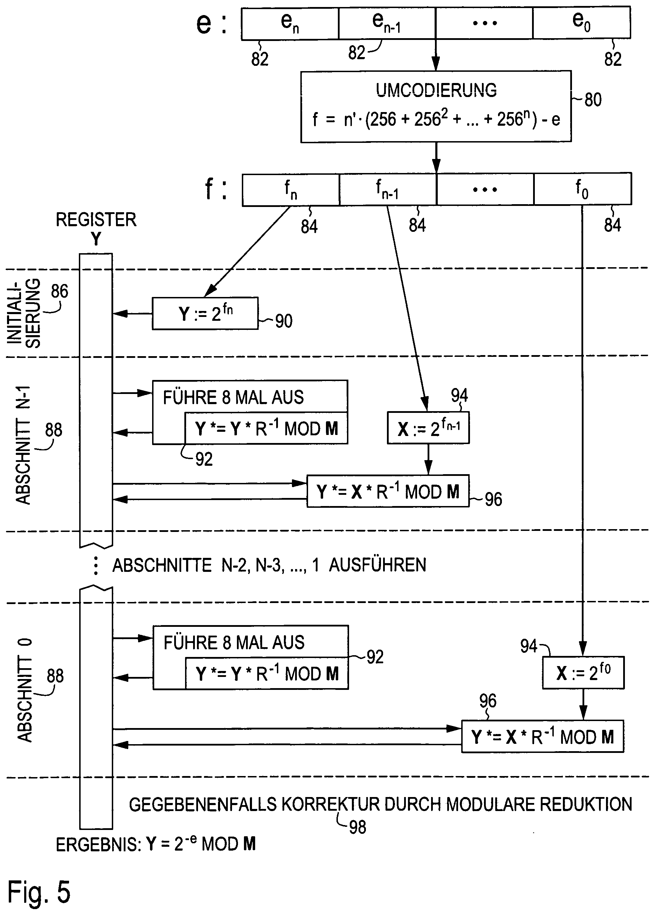

Fig. 5 veranschaulicht einen beispielhaften Ablauf der gerade beschriebenen Verfahren 2 und 3. In Schritt 80 erfolgt die Umcodierung des Exponenten e gemäß Verfahren 3, um aus dem ursprünglichen Exponenten e mit seinen Bitgruppen 82 - hier die Bytes $e_n, e_{n-1}, \ldots, e_0$ - den umcodierten Exponenten $f$ mit seinen Bitgruppen 84 - hier die Bytes $f_n, f_{n-1}, \ldots, f_0$ - zu erhalten.

Der auf die Umcodierung in Schritt 80 folgende Verfahrensablauf lässt sich in eine Initialisierung 86 und $n$ Abschnitte 88 unterteilen. Im Zuge der Initialisierung 86 wird in Schritt 90 der Befehl "SETZE **Y** = $2^{fn}$" gemäß Zeile (2.1) des Verfahrens 2 ausgeführt. Jeder der $n$ Abschnitte 88 entspricht je einem Schleifendurchlauf des Verfahrens 2 und ist je einer der Bitgruppen 84 des umcodierten Exponenten $f$ zugeordnet.

Jeder Abschnitt 88 weist drei wesentliche Schritte 92, 94 und 96 auf. In Schritt 92 werden gemäß den Zeilen (2.3) und (2.4) von Verfahren 2 acht Montgomery-Quadrierungen des im Register **Y** enthaltenen Zwischenergebnisses ausgeführt. In Schritt 94, der der Zeile (2.6) entspricht, wird im Register **X** eine Zweierpotenz mit einem Exponenten gespeichert, der durch die zugeordnete Bitgruppe 84 des umcodierten Exponenten $f$ gebildet wird. Dieser Schritt 94 lässt sich effizient dadurch implementieren, dass das Register **X** zunächst gelöscht wird und dann das eine Bit, dessen Bitposition durch die zugeordnete Bitgruppe 84 angegeben wird, auf den Wert "1" gesetzt wird. Schritt 96 entspricht Zeile (2.7) von Verfahren 2 und beinhaltet eine Montgomery-Multiplikation der Register **Y** und **X.**

Nachdem insgesamt $n$ Abschnitte 88 ausgeführt worden sind, liegt - nach einer gegebenenfalls noch erforderlichen Korrektur durch eine modulare Reduktion in Schritt 98 - das gewünschte Endergebnis $2^{-e}$ mod **M** in Register **Y** vor. Dieses Endergebnis wird in dem in Fig. 4 gezeigten Fermat-Test in Schritt 78 weiterverwendet.

Im folgenden werden einige optionale Verfeinerungen und Weiterentwicklungen der bisher beschriebenen Verfahren dargestellt. In unterschiedlichen Ausführungsalternativen können unterschiedliche Kombinationen dieser Verfeinerungen und Weiterentwicklungen genutzt werden, um beispielsweise die eingesetzten Verfahren besonders gut an bestimmte Montgomery-Koprozessoren 56, 56', 56", 56''' anzupassen oder um die Ausspähungssicherheit weiter zu erhöhen.

Zunächst wird auf die potentielle Schwierigkeit bei der Exponenten-Umcodierung gemäß Verfahren 3 eingegangen, dass für $f_n$ ein Wert größer als 255 auftreten kann. Für ein kleines $e_n$ ist dann möglicherweise der in Schritt (2.1) von Verfahren 2 bestimmte Wert $2^{fn}$ größer als der Modul $m$ und damit zu groß, um als Initialwert in dem Register **Y** gespeichert zu werden. Allerdings kann bei allen hier behandelten Montgomery-Koprozessoren 56, 56', 56", 56''' die Registergröße für den Modul $m$ so gewählt werden, dass für den jeweiligen Montgomery-Koeffizienten $n'$ die Ungleichung $2^{(4/5)\cdot n'} < m < 2^{n'}$ erfüllt ist. Die Bedingung $2^{fn} < m$ kann dann für ein sehr kleines $\varepsilon > 0$ wie folgt verstärkt werden:

$$f_n = n' \cdot (256/255) \cdot (1 - \varepsilon) - e_n \in [\, 0, (4/5) \cdot n'\, ]$$

Die gerade genannte Bedingung ist auf jeden Fall erfüllt, wenn die Ungleichung $\frac{1}{2} \cdot n' < e_n < n'$, die im folgenden mit (*) bezeichnet wird, gilt.

Falls Verfahren 3 einen zu großen Wert für $f_n$ ergibt, kann dieser Wert vor Schritt 90 von Fig. 5 mit dem Modul $m$ modular reduziert werden, so dass dann in Schritt 90 das Register **Y** auf den sich ergebenden Rest gesetzt wird. Für sehr kleine $e_n(e_n < n'/256)$ ist es auch möglich, den $n$-ten Abschnitt 82 in den $(n - 1)$-ten Abschnitt 82 aufzunehmen. In diesem Fall wird $n$ um 1 verringert, und $e_{n-1}$ wird um $e_n \cdot 256$ erhöht. Ferner kann in manchen Ausgestaltungen vorgesehen sein, die zur Maskierung des Primzahlkandidaten $m$ in Schritt 74 von Fig. 4 verwendete Zufallszahl $r$ so zu wählen, dass die Ungleichung (*) erfüllt ist.

Für die letztgenannte Alternative kann beispielsweise bei der Bestimmung einer geeigneten Zufallszahl $r$ in Schritt 72 von Fig. 4 zunächst ein Wert $s$ derart bestimmt werden, dass für eine positive ganze Zahl $k$ die Beziehung $s \cdot ((m-1)/2) \approx (1/3) \cdot n' \cdot 256^k$ gilt. Dies kann durch eine kurze - in manchen Ausgestaltungen auch nur näherungsweise ausgeführte - Division erfolgen. Dann ergibt sich für jede Zahl $r$ zwischen $s$ und $2 \cdot s$ vermöge der Definition $e := r \cdot (m-1)/2$ ein Exponent $e$, der die Ungleichung (*) erfüllt. Eine solche Zahl r wird zufällig ausgewählt und als Maskierungsparameter in Schritt 72 von Fig. 4 verwendet.

Die in den Schritten 94 von Fig. 5 bzw. Zeile (2.6) von Verfahren 2 herangezogenen Zweierpotenzen weisen nur ein einziges auf den Wert "1" gesetztes Bit auf. In den Schritten 96 von Fig. 5 bzw. Zeile (2.7) von Verfahren 2 dienen diese Zweierpotenzen als Faktoren je einer Montgomery-Multiplikation. In manchen Konstellationen könnte hier ein Ansatzpunkt für einen Nebenkanalangriff - z.B. einen SPA- oder Template-Angriff - bestehen, durch den versucht werden könnte, die Position des einen "1"-Bits zu bestimmen.

Um die Sicherheit des Verfahrens gegen die gerade genannte Angriffsmöglichkeit zu erhöhen, ist daher in manchen Ausgestaltungen vorgesehen, als Faktoren der Montgomery-Multiplikationen nicht die Werte $2^{fi}$, sondern die Werte $m$ - $2^{fi}$ zu verwenden. Zeile (2.6) von Verfahren 2 kann also beispielsweise durch den Pseudocode-Befehl "SETZE **X** = **M** - $2^{fi}$" ersetzt werden. Wegen der modularen Berechnung ändert sich dadurch lediglich das Vorzeichen des Zwischenergebnisses, das nach der Montgomery-Multiplikation von Zeile (2.7) im Register **Y** enthalten ist. Für die Schleifendurchläufe mit i = $n$-1, ..., 1 wird dieser zusätzliche Faktor von -1 jedoch bei den Quadrierungen in Zeile (2.4) des jeweils folgenden Schleifendurchlaufs korrigiert. Lediglich beim letzten Schleifendurchlauf ($i$ = 0) findet keine solche Korrektur mehr statt; hier wirkt sich aber der Vorzeichenwechsel deshalb nicht aus, weil in Schritt 78 von Fig. 4 sowieso getestet wird, ob Register **Y** den Inhalt $\pm 1$ aufweist.

Um bei der gerade beschriebenen Ausgestaltung die Berechnung der Werte $m - 2^{fi}$ zu vereinfachen, ist in einer optionalen Weiterbildung vorgesehen, bei der Auswahl der Primzahlkandidaten $m$ in den Schritten 10 und 24 von Fig. 1 die zusätzliche Nebenbedingung zu fordern, dass kein Primzahlkandidat $m$ acht oder mehr aufeinanderfolgende Bytes mit dem Wert "0" enthalten darf. Diese Nebenbedingung stellt sicher, dass sich das Übertragsbit bei der Subtraktion $m - 2^{fi}$ nur um höchstens 8 Bytes fortplanzen kann, so dass für diese Subtraktion ein Verfahren mit konstanter Laufzeit verwendet werden kann. Die gerade genannte Nebenbedingung erhöht überdies die Sicherheit gegen potentielle Nebenkanalangriffe, bei denen versucht werden könnte, Informationen über Lade- oder Muliplikationsvorgänge mit Datenblöcken, die den Wert 0 aufweisen, auszuspähen.

In einer weiteren Alternative ist vorgesehen, als Faktoren der Montgomery-Multiplikationen in den Schritten 96 von Fig. 5 bzw. Zeile (2.7) von Verfahren 2 nicht die Werte $2^{fi}$, sondern die Werte $m \oplus 2^{fi}$ zu verwenden, wobei das Symbol "$\oplus$" die Exklusiv-Oder-Operation darstellt. Aus den oben dargelegten Gründen liefert auch diese Abwandlung das korrekte Ergebnis, weil der Wert $m \oplus 2^{fi}$ modulo $m$ entweder gleich $2^{fi}$ oder gleich $-2^{fi}$ ist. Allerdings ist diese Ausgestaltung nicht für alle Montgomery-Koprozessoren 56, 56', 56", 56"' mit den Beschränkungen für die Eingabewerte der Montgomery-Multiplikation verträglich.

Eine weitere Ausführungsvariante betrifft speziell den oben beschriebenen Montgomery-Koprozessor 56"', der für einen der beiden Faktoren der Montgomery-Multiplikation eine von der Länge des Moduls unterschiedliche Länge zulässt. Die Montgomery-Multiplikationen in den Schritten 96 von Fig. 5 werden besonders effizient ausgeführt, wenn die Länge des genannten Montgomery-Faktors auf 256 Bit gesetzt wird. Allerdings besteht dann das Problem, wie das einzige "1"-Bit jedes Wertes $2^{fi}$ wirksam maskiert werden kann. In manchen Ausgestaltungen ist vorgesehen, dieses Problem dadurch zu lösen, dass der Modul in ein Register des Koprozessors 56"' geschrieben wird. Wenn der Modul eine ungerade Anzahl von 128-Bit-Blöcken aufweist, so wird der höchstwertige 128-Bit-Block angehängt.

Als Faktor **X** der Montgomery-Multiplikationen in den Schritten 96 von Fig. 5 werden in diesen Ausgestaltungen jeweils zwei 128-Bit-Blöcke, beginnend mit dem höchstwertigen Block, verwendet, wobei das dem Wert $2^{fi}$ entsprechende Bit invertiert wird. Bei jedem weiteren Schleifendurchlauf werden die nächsten beiden Blöcke verwendet, wobei nach dem geringstwertigen Block wieder mit dem höchstwertigen Block begonnen wird.

Wenn die Bytelänge des Moduls kein Vielfaches der doppelten Anzahl der 128-Bit-Blöcke des Moduls ist, müssen die letzten ausgeführten Montgomery-Multiplikationen gesondert behandelt werden. Beispielsweise kann vorgesehen sein, die geringstwertigen Bytes des Moduls ohne Maskierung zu verarbeiten. Als Alternative können einige zusätzliche Quadrierungs- und Multiplikationsvorgänge ausgeführt werden, was jedoch zusätzlichen Rechenaufwand verursacht. Eine weitere Alternative, die jedoch die Komplexität des Programmcodes erhöht, besteht darin, mehrere Kopien des Moduls zu überlagern. In diesem Fall werden für die "mittleren" Multiplikationen der höchstwertige Block oder die höchstwertigen Blöcke des Moduls zu dem geringstwertigen Block oder den geringstwertigen Blöcken des Moduls addiert.

Es versteht sich, dass die hier beschriebenen Ausführungsformen und Ausführungsvarianten lediglich als Beispiele zu sehen sind. Weitere Abwandlungen und Kombinationen der hier beschriebenen Merkmale sind für den Fachmann unmittelbar ersichtlich.

**Patentansprüche**

1. Verfahren zur Prüfung, ob ein Wert eine Primzahl darstellt, für eine kryptographische Anwendung, wobei ein Fermat-Test (12, 26) durchgeführt wird, der eine modulare Potenzierung einer Basis mit einem Exponenten ($e$) und einem Modul ($m$) beinhaltet, wobei der Exponent ($e$) von dem zu prüfenden Wert abhängt und der Modul ($m$) identisch mit dem zu prüfenden Wert ist,

   die modulare Potenzierung unter Verwendung von Montgomery-Operationen ausgeführt wird, **dadurch gekennzeichnet, dass**

   die modulare Potenzierung als modulare Potenzierung mit einem positiven und ganzzahligen Exponenten und einer Basis ausdrückbar ist, die ein gebrochenzahliger Wert mit einer Zweierpotenz im Nenner ist, und

   der Exponent ($e$) der modularen Potenzierung umcodiert wird, um einen umcodierten Exponenten ($f$) zu erhalten, wobei der umcodierte Exponent ($f$) die Differenz eines von einem Montgomery-Parameter ($R$) abhängigen Wertes und des Exponenten ($e$) der modularen Potenzierung ist.

2. Verfahren nach Anspruch 1, **dadurch gekennzeichnet, dass** die modulare Potenzierung als modulare Potenzierung mit der Basis ½ ausdrückbar ist.

3. Verfahren nach einem der Ansprüche 1 bis 2, **dadurch gekennzeichnet, dass** die modulare Potenzierung mehrere Verfahrensabschnitte (88) aufweist, wobei in jedem Abschnitt (88) jeweils mehrere Montgomery-Quadrierungen (92) eines Zwischenergebnisses (Y) und genau eine Montgomery-Multiplikation (96) des Zwischenergebnisses (Y) mit einem von dem Exponenten (*e*) der modularen Potenzierung abhängigen Faktor (X) ausgeführt werden.

4. Verfahren nach Anspruch 3, **dadurch gekennzeichnet, dass** in jedem Abschnitt (88) acht Montgomery-Quadrierungen (92) des Zwischenergebnisses (Y) ausgeführt werden.

5. Verfahren nach Anspruch 3 oder Anspruch 4, **dadurch gekennzeichnet, dass** der Faktor (X) der Montgomery-Multiplikation (96) in Abhängigkeit von einer Zweierpotenz bestimmt wird, deren Exponent durch eine Bitgruppe (84) des umcodierten Exponenten (*f*) gebildet wird.

6. Verfahren nach Anspruch 5, **dadurch gekennzeichnet, dass** der Faktor (X) der Montgomery-Multiplikation (96) identisch zu der genannten Zweierpotenz ist, oder dass der Faktor (X) der Montgomery-Multiplikation (96) durch eine Operation, in die der Modul (*m*) eingeht, aus der genannten Zweierpotenz gewonnen wird.

7. Verfahren nach einem der Ansprüche 1 bis 6, **dadurch gekennzeichnet, dass** der Exponent (*e*) der modularen Potenzierung aus dem zu prüfenden Wert durch eine Verschiebung des zu prüfenden Wertes nach rechts und eine Maskierung gewonnen wird.

8. Verfahren nach einem der Ansprüche 1 bis 7, **dadurch gekennzeichnet, dass** das Verfahren durch mindestens einen Prozessor (54, 56, 56', 56", 56'''), insbesondere mindestens einen Prozessor (54, 56, 56', 56", 56''') eines tragbaren Datenträgers (50), ausgeführt wird.

9. Verfahren nach einem der Ansprüche 1 bis 8, **dadurch gekennzeichnet, dass** das Verfahren zur Bestimmung mindestens eines Parameters eines RSA-Schlüssels oder eines RSA-CRT-Schlüssels dient.

10. Computerprogrammprodukt mit einer Vielzahl von Programmbefehlen, die mindestens einen Prozessor (54, 56, 56', 56", 56''') dazu veranlassen, ein Verfahren nach einem der Ansprüche 1 bis 9 auszuführen.

11. Vorrichtung, insbesondere tragbarer Datenträger, mit mindestens einem Prozessor (54, 56, 56', 56", 56''') und mindestens einem Speicher (60, 64, 66, 68), wobei die Vorrichtung dazu eingerichtet ist, ein Verfahren nach einem der Ansprüche 1 bis 9 auszuführen.

**Claims**

1. A method for the check whether a value represents a prime number, for a cryptographic application, wherein there is carried out a Fermat test (12, 26) which includes a modular exponentiation of a base with an exponent (*e*) and a module (*m*),
wherein the exponent (*e*) depends on the value to be checked and the module (*m*) is identical with the value to be checked,
the modular exponentiation is executed employing Montgomery operations, **characterized in that**
the modular exponentiation is expressible as a modular exponentiation with a positive and integer exponent and a base which is a fractional value with a power of two in the denominator and
the exponent (*e*) of the modular exponentiation is recoded in order to obtain a recoded exponent (*f*), wherein the recoded exponent (*f*) is the difference of a value dependent on a Montgomery parameter (*R*) and of the exponent (*e*) of the modular exponentiation.

2. The method according to claim 1, **characterized in that** the modular exponentiation is expressible as a modular exponentiation with the base ½.

3. The method according to any of claims 1 to 2, **characterized in that** the modular exponentiation has several method segments (88), wherein in each segment (88) respectively several Montgomery squarings (92) of an intermediate result (Y) and exactly one Montgomery multiplication (96) of the intermediate result (Y) with a factor (X) dependent on the exponent (*e*) of the modular exponentiation are executed.

4. The method according to claim 3, **characterized in that** in each segment (88) eight Montgomery squarings (92) of the intermediate result (Y) are executed.

5. The method according to claim 3 or claim 4, **characterized in that** the factor (X) of the Montgomery multiplication (96) is determined in dependence on a power of two, whose exponent is formed by a bit group (84) of the recoded exponent (*f*).

6. The method according to claim 5, **characterized in that** the factor (X) of the Montgomery multiplication (96) is identical to the stated power of two, or that the factor (X) of the Montgomery multiplication (96) is gained from the stated power of two by an operation into which the module (*m*) enters.

7. The method according to any of claims 1 to 6, **characterized in that** the exponent (*e*) of the modular exponentiation is gained from the value to be checked by a shift of the value to be checked to the right and a masking.

8. The method according to any of claims 1 to 7, **characterized in that** the method is executed by at least one processor (54, 56, 56', 56'', 56'''), in particular at least one processor (54, 56, 56', 56'', 56''') of a portable data carrier (50).

9. The method according to any of claims 1 to 8, **characterized in that** the method serves for the determination of at least one parameter of an RSA key or an RSA-CRT key.

10. A computer program product having a plurality of program commands which prompt at least one processor (54, 56, 56', 56'', 56''') to execute a method according to any of claims 1 to 9.

11. A device, in particular portable data carrier, having at least one processor (54, 56, 56', 56'', 56''') and at least one memory (60, 64, 66, 68), wherein the device is arranged to execute a method according to any of claims 1 to 9.

**Revendications**

1. Procédé destiné à examiner si une valeur représente un nombre premier, pour une application cryptographique, cependant qu'un test de Fermat (12, 26) est effectué, lequel comprend une exponentiation modulaire d'une base à l'aide d'un exposant (*e*) et d'un module (*m*), cependant que l'exposant (*e*) dépend de la valeur à vérifier et que le module (*m*) est identique à la valeur à vérifier, que l'exponentiation modulaire est exécutée par utilisation d'opérations de Montgomery, **caractérisé en ce que**
l'exponentiation modulaire peut être exprimée comme exponentiation modulaire ayant un exposant positif et entier et une base qui est une valeur fractionnelle ayant une puissance de deux dans le dénominateur, et
l'exposant (*e*) de l'exponentiation modulaire est recodé afin d'obtenir un exposant (*f*) recodé, cependant que l'exposant (*f*) recodé est la différence entre une valeur dépendant d'un paramètre de Montgomery (*R*) et l'exposant (*e*) de l'exponentiation modulaire.

2. Procédé selon la revendication 1, **caractérisé en ce que** l'exponentiation modulaire peut être exprimée comme exponentiation modulaire ayant la base ½.

3. Procédé selon une des revendications de 1 à 2, **caractérisé en ce que** l'exponentiation modulaire comporte plusieurs parties de procédé (88), cependant que, à chaque partie (88), respectivement plusieurs élévations au carré de Montgomery (92) d'un résultat intermédiaire (*Y*) et exactement une multiplication de Montgomery (96) du résultat intermédiaire (Y) avec un facteur (X) dépendant de l'exposant (*e*) de l'exponentiation modulaire sont exécutées.

4. Procédé selon la revendication 3, **caractérisé en ce que**, à chaque partie (88), huit élévations au carré de Montgomery (92) du résultat intermédiaire (Y) sont exécutées.

5. Procédé selon la revendication 3 ou la revendication 4, **caractérisé en ce que** le facteur (X) de la multiplication de Montgomery (96) est déterminé en fonction d'une puissance de deux dont l'exposant est constitué par un groupe de bits (84) de l'exposant (*f*) recodé.

6. Procédé selon la revendication 5, **caractérisé en ce que** le facteur (X) de la multiplication de Montgomery (96) est identique à ladite puissance de deux, ou **en ce que** le facteur (X) de la multiplication de Montgomery (96) est, par une opération dans laquelle entre le module (*m*), obtenu à partir de ladite puissance de deux.

7. Procédé selon une des revendications de 1 à 6, **caractérisé en ce que** l'exposant (*e*) de l'exponentiation modulaire est obtenu à partir de la valeur à examiner par un décalage de la valeur à examiner vers la droite et par un masquage.

8. Procédé selon une des revendications de 1 à 7, **caractérisé en ce que** le procédé est exécuté par au moins un processeur (54, 56, 56', 56", 56'''), en particulier par au moins un processeur (54, 56,56', 56", 56''') d'un support de données portable (50).

9. Procédé selon une des revendications de 1 à 8, **caractérisé en ce que** le procédé sert à la détermination d'au moins un paramètre d'une clé RSA ou d'une clé RSA-CRT.

10. Produit programme d'ordinateur comportant une pluralité d'instructions de programme qui amènent au moins un processeur (54, 56, 56', 56", 56''') à exécuter un procédé selon une des revendications de 1 à 9.

11. Dispositif, en particulier support de données portable, comportant au moins un processeur (54, 56, 56', 56", 56''') et au moins une mémoire (60, 64, 66, 68), cependant que le dispositif est

Fig. 1

10 / 24

BESTIMME PRIMZAHLKANDIDAT

42

NICHT-LEERES
KANDIDATENFELD
VORHANDEN ?

NEIN

JA

44

ERZEUGE ZUFÄLLIGEN BASISWERT

B

46

ERZEUGE KANDIDATENFELD
MITTELS SIEB DES ERATOSTHENES

S[i]

48

WÄHLE PRIMZAHLKANDIDAT
AUS KANDIDATENFELD AUS

M

**Fig. 2**

50

54

56
(56'/56''/56''')

58

62

52

70

60

64

66

68

**Fig. 3**

PRIMZAHL-
KANDIDAT
M

FERMAT-TEST

BESTIMME ZUFALLSZAHL r ~72

r

M SETZE e := r · (M-1)/2 ~74

e

M BERECHNE Y = 2$^{-e}$ MOD M
UNTER VERWENDUNG VON
MONTGOMERY-OPERATIONEN ~76

Y

Y = ±1 ? NEIN

78 14 / 28

JA

M IST ZUSAMMENGESETZT

12 / 26

VORAUSSICHT-
LICHE PRIMZAHL
P / Q

Fig. 4

e : | $e_n$ | $e_{n-1}$ | $\cdots$ | $e_0$ |

82        82                   82

**UMCODIERUNG**

$$f = n' \cdot (256 + 256^2 + \ldots + 256^n) - e$$

~80

f : | $f_n$ | $f_{n-1}$ | $\cdots$ | $f_0$ |

84        84                  84

REGISTER
Y

INITIALI-
SIERUNG   86

$Y := 2^{f_n}$ ~90

ABSCHNITT N-1   88

FÜHRE 8 MAL AUS

$Y \mathrel{*}= Y * R^{-1}$ MOD **M**

~92

94

$X := 2^{f_{n-1}}$

$Y \mathrel{*}= X * R^{-1}$ MOD **M** ~96

⋮ ABSCHNITTE N-2, N-3, ..., 1 AUSFÜHREN

ABSCHNITT 0   88

FÜHRE 8 MAL AUS

$Y \mathrel{*}= Y * R^{-1}$ MOD **M**

~92

94~

$X := 2^{f_0}$

96

$Y \mathrel{*}= X * R^{-1}$ MOD **M**

GEGEBENENFALLS KORREKTUR DURCH MODULARE REDUKTION
~98

ERGEBNIS: $Y = 2^{-e}$ MOD **M**

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4405829 A
- DE 102004044453 A1
- EP 1564649 A2
- WO 2004032411 A1
- EP 2104031 A2

**In der Beschreibung aufgeführte Nicht-Patentliteratur**

- **PETER L. MONTGOMERY.** Modular multiplication without trial division. *Mathematics of Computation,* April 1985, vol. 44 (170), 519-521
- **CHEUNG et al.** *A Scalable Hardware Architecture for Prime Number Validation,* 2004
- **LE MASLE et al.** *Parametric Encryption Hardware Design,* 2010
- **MICHAEL O. RABIN.** Probabilistic algorithms for testing primality. *Journal of Number Theory,* 1980, vol. 12, 128-138